# EUROPEAN PATENT APPLICATION

(11) **EP 1 587 082 A2**
(43) Date of publication of application: **19.10.2005**
(21) Application number: 05300216.8
(22) Date of filing: 23.03.2005
(51) Int. Cl.: G11B 7/085

(54) **Recording or replay appliance for optical recording media**

(30) Priority: 15.04.2004 DE 102004018803
(71) Applicant: Thomson Licensing, 92100 Boulogne Billancourt (FR)
(72) Inventor: Tabor, Günter, 78056, Villingen-Schwenningen (DE); Baas, Reiner, 77790, Steinach (DE); Dupper, Rolf, 78050, Villingen-Schwenningen (DE)
(74) Representative: Kurth, Dieter

(57) **Abstract**

In order to design the tracking for the pickup (U) of a recording or replay appliance for optical recording media to be particularly cost-effective, one edge (K1) of a board (P) which has to be provided in any case, for example the motherboard, is provided for guiding the pickup (U), instead of a guide rod or two guide rods. This edge (K1) is preferably formed as a bent edge such that it forms a guide rail (S) for the pickup (U), which engages with the guide rail (S) by means, for example, of U-shaped ribs (R). The pickup (U) can preferably slide or move by means of a leaf spring (F1) which engages behind the board (P) and is connected without any play to the guide rail (S) on the board (P).

## Description

The invention relates to a recording or replay appliance for optical recording media having a board, which is also referred to as a mechadeck, for holding electronic components and having a movable optical scanning device, which is also referred to as a pickup and is provided for recording data or information on an optical recording medium or for reading data or information from an optical recording medium, and which, despite little complexity, is guided with high precision parallel to the plane of the recording medium.

Examples of recording or replay appliances such as these are CD or DVD players which are equipped with optical scanning apparatus, the so-called pickup, in order to read data from an optical recording medium, such as a compact disc- or CD for short - or a digital versatile disc - or DVD for short - or to record data or information on such recording media.
The pickup is positioned above the data track or tracks on the recording medium, which is in the form of a disc, by means of a coarse setting and, if required, with a fine drive for fine setting. The pickup is moved in the radial direction above the recording medium, which is in the form of a disc, by means of a coarse drive which, for example, is formed from a toothed rod, which is attached to the pickup, and a gearwheel, which engages with the toothed rod and is driven by means of an electric motor. In order to ensure that the pickup is guided as parallel as possible over the entire recording or replay area of a recording medium which is assumed to be flat, at least one guide rod is generally provided, which is mounted on the board or is attached to a housing, and on which the pickup is guided.

However, guide rods for guiding the pickup represent complex individual parts which have to be installed on the board with high precision, such that the object of the invention is to design the guidance for the pickup for a recording or replay appliance for optical recording media both with high accuracy and with a small number of individual parts.

The invention achieves this object by the features specified in claim 1. Advantageous refinements are specified in dependent claims.

The invention is based on the idea of providing one edge of the board which is provided in any case, the so-called motherboard of the mechadeck, as a guide element for the pickup instead of a guide rod.
One exemplary embodiment provides for that edge of the board which is provided as the guide element to be in the form of a guide rail which is incorporated in the board, that is produced from metal. This guide rail is produced, for example, by bending one edge of the board at right angles. As an alternative to this, the guide rail can be produced from plastic and can be sprayed onto a board that is produced from metal or plastic, or can be adhesively bonded to it.
A guide element is likewise provided on the pickup and engages with the guide element on the board. For example, this guide element is in the form of a rib which surrounds the guide rail, or a sliding element with a spring as the opposing support.
It is advantageous to design the board with a cutout with at least two parallel-running edges. The guide rail is provided on one of the two edges, the guide edge. The parallel-running other edge of the cutout is provided as a second guide edge for holding the pickup, and is designed appropriately.

By means of at least one first leaf spring, which is attached to the pickup and which engages behind the board on the guide rail, the pickup can on the one hand slide and on the other hand is nevertheless attached to the board without any play. Furthermore, the pickup can likewise slide or move by means of a second leaf spring, and is nevertheless connected to the second guide edge without any play.

Since one edge of the board is provided instead of a guide rod as a guide element for the pickup, the number of individual parts is reduced, the assembly effort is reduced and, nevertheless, this ensures that the pickup is guided with high precision.
In order to ensure that the pickup is guided parallel over the entire recording or replay area of a recording medium which is assumed to be flat, the plane of the disc plate which holds the optical recording medium is aligned with respect to the plane which forms the pickup, which is guided on the edges of the board, during the movement over the recording or replay area of the recording medium, which is in the form of a disc.

The invention will be explained in more detail with reference to an exemplary embodiment in the drawings, in which:
- Figure 1: shows one exemplary embodiment of the invention, illustrated in an exploded form,
- Figure 2: shows a first partial detail of the exemplary embodiment, illustrated in perspective,
- Figure 3: shows a second partial detail of the exemplary embodiment, illustrated in perspective, and
- Figure 4: shows a partial section through the exemplary embodiment.

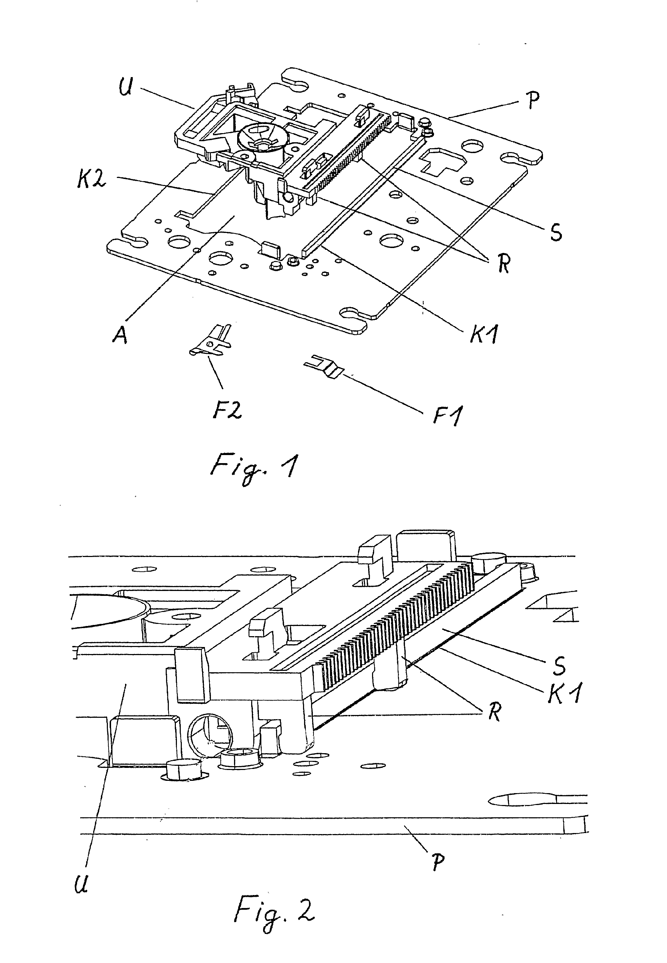

The reference symbols in the figures are used such that they correspond. The exemplary embodiment in Figure 1 is illustrated in the form of an exploded drawing and shows a board P, the so-called motherboard of the mechadeck, which, for example, is produced from metal. The board P has a cutout A with at least two parallel edges K1 and K2, with one edge K1 being in the form of a guide rail S. In the illustrated exemplary embodiment, the guide rail S is formed by a bent edge of the board P, which is bent at right angles, and represents the guide element on the board P for the pickup U.

Guide elements are likewise provided on the pickup U which, in the illustrated exemplary embodiment, are formed by two U-shaped ribs R which engage with the guide rail S once the pickup U has been mounted on the board P. In the illustrated exemplary embodiment, a leaf spring F1 is also provided, which is attached to the pickup U and engages behind the board P. The pickup U can thus slide and move, and is nevertheless connected to the board P without any play. The pickup U can likewise slide or move on the edge K2, which is in the form of a second guide edge, and is guided on it without any play by means of a further leaf spring F2. According to one embodiment, which is not illustrated, the guide rail S is designed to be U-shaped, for example by bending the edge K1 twice, such that a tab on the U-shaped ribs R engages in a U-shaped guide edge K1. Spring elements are then preferably provided on the U-shaped ribs R or in the U-shaped guide edge and press the guide elements elastically against a sliding surface which is provided as a guide rail S.
In conjunction with the exemplary embodiment illustrated in the drawings, Figure 2 shows the pickup U, mounted on the board P, illustrated in perspective, with the ribs R on the pickup U, which are provided as guide elements, engaging with the guide rail S on the board P. The guide rail S is surrounded by the guide ribs R in a U-shape. This is particularly evident from the section view illustrated in Figure 4, which shows the angled edge K1 of the board P, which engages in a U-shaped opening in the pickup U that is formed by the rib R on the pickup U. The rib R on the pickup U in the illustrated example is provided such that it slides on the board P, corresponding to the end surface of one limb of the U-shaped rib R. According to the one exemplary embodiment, which is not illustrated, the pickup U is provided such that it slides on the end surface of the guide rail S on the board P. Corresponding to an embodiment such as this, the pickup U slides in the base of the U-shaped opening in the pickup U, which is formed on the pickup U with the rib R.

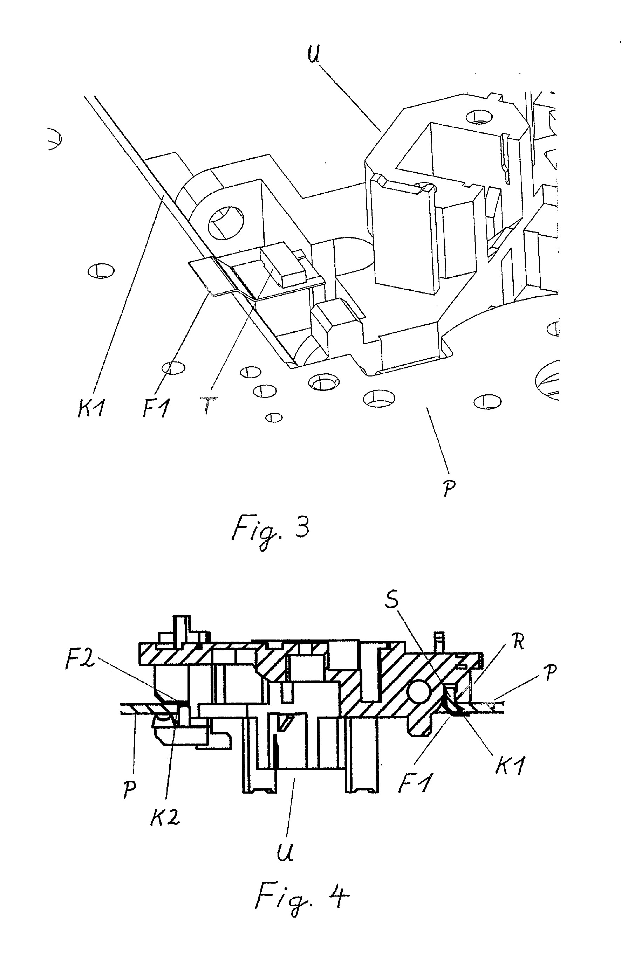

Figure 3 shows a second partial detail of the exemplary embodiment illustrated in the form of a perspective view, which shows how the leaf spring F1 that is attached to the pickup U can slide or move the pickup U such that it engages behind the board P and is connected to the board P on the bent edge K1 without any play. A T-shaped latching element T is provided on the pickup U in order to attach the leaf spring F1 and has a shaft height which corresponds to the thickness of the leaf spring F1 and a shaft width which corresponds to a U-shaped opening which is provided in the leaf spring F1.
The leaf spring F1 is bent in a staircase shape on the side opposite its U-shaped opening, thus resulting in captive security being provided for the leaf spring F1 in addition to the attachment to the latching element T. In order to ensure as uniform a contact pressure force of the ribs R as possible, the latching element T and the leaf spring F1 are arranged centrally with respect to the ribs R which guide the pickup U on the edge K1 of the board P. In order to provide the capability to slide and move and to guide the pickup U without any play on the edge K2 which is opposite the edge K1, a second leaf spring F2 is provided in the illustrated exemplary embodiment, and has spring arms which extend at the sides. These spring arms are positioned at an angle to the base surface of the leaf spring F2, so that a leaf spring F2 forms two contact points on the board P. The ends of the spring arms are curved in order to ensure the capability to slide on the surface of the board P. In order to attach the second leaf spring F2, a U-shaped cutout is likewise provided on the side opposite the spring arms and surrounds a holding element which is provided on the pickup U. Furthermore, a hole is provided in the leaf spring F2 which prevents twisting of the leaf spring F2 by a latching tab on the pickup U engaging in the hole, or the leaf spring F2 being attached to the pickup U by means of a barrier.

The first leaf spring F1 and the second leaf spring F2 represent examples of spring elements which can optionally be used for mounting the pickup U on the board P, with the second leaf spring F2 (which is more complex than the first leaf spring F1) preferably being used on the second edge K2 of the board P, on which only one guide element of the pickup U is used. Since the edge K1, which is in the form of a guide rail S, provides sufficient robustness for the board P on its own, there is generally no need to bend the second edge K2. Irregularities in the planarity of the second edge K2 are then compensated for by the spring arms of the second leaf spring F2.

Figure 4 shows a partial cross section through the exemplary embodiment, with the pickup U being mounted on the board P and being held on the board P by the leaf springs F1, F2.

The pickup U is guided along the guide rail S by means of the U-shaped ribs R which surround the guide rail S of the board P in a U-shape, can slide and move by means of the leaf spring F1 which engages behind the board P, and are held without any play. The pickup U can slide and move by means of the leaf spring F2, and is attached without any play to the second edge K2 of the board P, which runs parallel to the first edge K1.

The invention can be produced with little effort since, rather than the guide rods, at least one edge K1, which is modified with little effort, of a board P that is required in any case is provided as a guide element for the pickup U.

## Claims

1. A recording or replay appliance having a board (P) for holding electronic components and having a movable pickup (U) for recording data on an optical recording medium or for reading data from an optical recording medium, wherein one edge (K1) of the board (P) is provided as a guide element for the pickup (U).

2. The recording or replay appliance as claimed in claim 1, wherein the edge (K1) which is provided as a guide element on the board (P) is a guide rail (S).

3. The recording or replay appliance as claimed in claim 2, wherein the guide rail (S) is a bent edge of the board (P).

4. The recording or replay appliance as claimed in claim 2, wherein the guide rail (S) is attached to that edge (K1) of the board (P) which is provided as a guide element.

5. The recording or replay appliance as claimed in claim 4, wherein
the guide rail (S) is produced from plastic and is sprayed onto the board (P).

6. The recording or replay appliance as claimed in claim 4, wherein
the guide rail (S) is adhesively bonded to the board (P) .

7. The recording or replay appliance as claimed in one of claims 1 to 6, wherein a guide element is provided on the pickup (U) and is in the form of a U-shaped rib (R) which surrounds the guide rail (S).

8. The recording or replay appliance as claimed in claim 1, wherein a leaf spring (F1) is attached to the pickup (U), which leaf spring, engaging behind the board (P), can slide or move the pickup (U) and is attached to the board (P) without any play.

9. The recording or replay appliance as claimed in one of claims 1 to 8, wherein a cutout (A) having at least two parallel-running edges (K1, K2) is provided in the board (P), wherein one edge (K1) is provided as a guide rail (S), and wherein the pickup (U) can slide or can move by means of at least one second leaf spring (F2) and is attached to the other edge (K2) of the cutout (A) without any play.

10. The recording or replay appliance as claimed in one of claims 1 to 9, wherein the board (P) is produced from metal or plastic.
